# EUROPÄISCHE PATENTSCHRIFT

(11) **EP 1 735 181 B1**
(45) Veröffentlichungstag und Bekanntmachung des Hinweises auf die Patenterteilung: **13.01.2010**
(21) Anmeldenummer: 05715719.0
(22) Anmeldetag: 04.03.2005
(51) Int. Cl.: B60N 2/235

(54) **VERRIEGELUNGSVORRICHTUNG, INSBESONDERE FÜR FAHRZEUGSITZ**
BLOCKING MECHANISM, ESPECIALLY FOR A VEHICLE SEAT
DISPOSITIF DE BLOCAGE, NOTAMMENT POUR SIEGE DE VEHICULE

(30) Priorität: 08.04.2004 DE 102004018042
(43) Veröffentlichungstag der Anmeldung: 27.12.2006
(73) Patentinhaber: Johnson Controls GmbH, 51399 Burscheid (DE)
(72) Erfinder: WEBER, Frank, 51519 Odenthal (DE); SUBRAMANIAN, Karthikeyan, Tamailnadu (IN)
(74) Vertreter: Hemmelmann, Klaus
(86) Internationale Anmeldenummer: PCT/EP2005/002278
(87) Internationale Veröffentlichungsnummer: WO 2005/097543

(56) Entgegenhaltungen:
- EP-A- 1 074 426
- EP-A- 1 225 086
- EP-A- 1 260 405
- DE-A1- 10 021 403
- US-A- 5 681 086
- US-A- 6 039 400
- US-B1- 6 520 583

## Beschreibung

Die Erfindung betrifft eine Verriegelungsvorrichtung, insbesondere für den Sitz eines Kraftfahrzeugs, mit mindestens einem ersten und einem zweiten Beschlagteil, die lösbar miteinander in formschlüssigen Eingriff bringbar sind, wobei mindestens das erste Beschlagteil einen Grundkörper sowie wenigstens einen in diesen eingelassenen Einsatz mit einer zum formschlüssigen Eingriff mit dem zweiten Beschlagteil geeigneten Außenkontur aufweist. Damit wird die Möglichkeit geschaffen, nur den einen Formschluß, beispielsweise mittels einer Verzahnung, ermöglichenden Einsatz aus einem Werkstoff zu fertigen, welcher den dort auftretenden Belastungen in besonderem Maße gerecht wird. Selbstverständlich kann auch vorgesehen werden, beide Beschlagteile mit entsprechenden Einsätzen zu versehen, insbesondere dann, wenn beide Beschlagteile im Verhältnis zu ihren mit Verzahnungen versehenen Bereichen eine erhebliche Größe aufweisen (siehe z.B. die gattungsbildende US 6 520 583 B1).

Aus der Offenlegungsschrift DE 102 26 293 A1 ist eine weitere Vorrichtung bekannt. Sie besteht aus einem ersten Beschlagteil, das mit dem Sitzteil eines Fahrzeugsitzes verbunden ist, sowie einem schwenkbar an der Rückenlehne des Sitzes angeordneten zweiten Beschlagteil in Form einer Rastklinke. Die Rückenlehne ist ihrerseits gegenüber dem Sitzteil um eine horizontale Schwenkachse drehbar, so dass bei der Drehung auch die Rastklinke um den Außenumfang des Beschlagteils herum verlagert wird und an verschiedenen Orten in eine Verzahnung des Beschlagteils eingreifen kann. Durch diesen Eingriff wird eine lösbare Verriegelung der Rückenlehne mit dem Sitzteil in verschiedenen Neigungsstellungen bewirkt.

Derartige Verriegelungsvorrichtungen haben sich in der Praxis grundsätzlich bewährt. In Abhängigkeit von der Feinheit der Verzahnung und der geforderten Festigkeit ist es jedoch häufig erforderlich, das gesamte mit der Verzahnung ausgestattete Beschlagteil aus einem hochfesten, gehärteten Werkstoff zu fertigen. Diese Materialien sind vergleichsweise teuer und erfordern eine relativ aufwändige Bearbeitung. Ferner ist auf eine verwindungsfreie Montage der daraus gefertigten Beschlagteile zu achten, da diese aufgrund ihrer geringen Bruchdehnung bei verspanntem Einbau zum Bruch neigen.

Der Erfindung liegt die Aufgabe zugrunde, vorbekannte Verriegelungsvorrichtungen bezüglich Werkstoffkosten, Fertigung und Montageeigenschaften weiter zu verbessern.

Die Aufgabe wird z.B. gegenüber einer Vorrichtung der eingangs genannten Art erfindungsgemäß dadurch gelöst, dass der Einsatz formschlüssig in den Grundkörper einge lassen ist. Die vom zweiten Beschlagteil auf den Einsatz ausgeübten Belastungen werden über diesen Formschluß sicher in den Grundkörper übertragen und von diesem in das Sitzteil abgeleitet, was fertigungstechnisch besonders günstig ist.

Vorzugsweise besteht der Grundkörper aus einem zähelastischen Werkstoff, während der Einsatz aus einem relativ härteren Werkstoff gefertigt wird. Zur Herstellung des Grundkörper ist insbesondere ein Stahl mit einer Zugfestigkeit von 450 N/mm² bis 650 N/mm², bevorzugt etwa 550 N/mm², geeignet. Mit Vorteil wird hierzu ein Stahl QSTE550 eingesetzt, der mit vertretbarem Werkzeugverschleiß direkt stanzbar ist. Der Einsatz hingegen wird vorzugsweise aus härtbarem Stahl mit einer Zugfestigkeit von 1000 N/mm² bis 1600 N/mm², insbesondere etwa 1500 N/mm², gefertigt, beispielsweise aus Stahl 42CrMo4. Geeignet ist beispielsweise auch ein Stahl 16 MnCr5 mit einer Zugfestigkeit von 1.100 N/mm².

Die Erfindung kommt vorzugsweise bei Lehnenverriegelungen von Fahrzeugsitzen zu Einsatz, bei welchen das erste und zweite Beschlagteil zueinander verriegelbar rotationsbeweglich angeordnet sind. Dabei verläuft die Drehachse der Rotationsbewegung üblicherweise durch das erste Beschlagteil, während das zweite Beschlagsteil als ihrerseits schwenkbare Rastklinke ausgebildet ist, die in mindestens einer Drehstellung zwischen den Beschlagteilen mit dem Einsatz des ersten Beschlagteils in Eingriff bringbar ist.

Die Konturen von Einsatz und Grundkörper können dabei so ausgebildet werden, dass eine auf den Einsatz wirkende Schubbelastung dessen Lage in Bezug auf den Grundkörper so verändert, dass die Kraftübertragung vom zweiten Beschlagteil in den Einsatz verbessert wird. Beispielsweise kann infolge einer derartigen Ausbildung bei einer auf die Vorrichtung wirkenden Überlast die Zahl der in Eingriff befindlichen Zähne von Einsatz und zweitem Bauteil vergrößert werden, wodurch die Sicherheit gegen Versagen erhöht wird.

Vorzugsweise wirkt der Formschluß zwischen Grundkörper und Einsatz nur in tangentialer oder radialer, nicht jedoch in lateraler Richtung. Der Einsatz kann bei der Montage problemlos von der Seite in die komplementäre Ausnehmung des Grundkörpers eingeschoben werden. Durch eine entsprechende Gestaltung der Einbausituation der Verriegelungseinrichtung oder ein Verpressen des Grundkörpers mit dem Einsatz (Crimpen) wird verhindert, dass der Einsatz später ungewollt aus dem Grundkörper herausfällt. Alternativ kann Einsatz stoffschlüssig, bevorzugt mittels einer elastisch und/oder plastisch verformbaren Masse, im ersten Beschlagteil fixiert werden.

### Figuren

Die Figuren stellen beispielhaft und schematisch verschiedene Ausführungen der Erfindung dar.

Es zeigen:
- Fig. 1: eine erste erfindungsgemäße Verriegelungsvorrichtung,
- Fig. 2: ein Detail der Vorrichtung nach Fig. 1,
- Fig. 3: eine Vorrichtung nach einer anderen Ausführung der Erfindung.

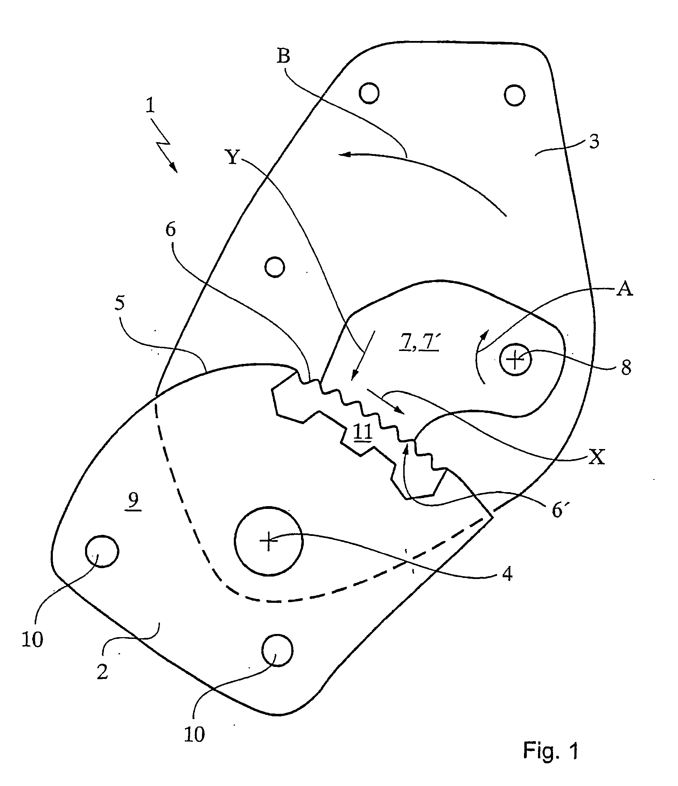

Die in Fig. 1 gezeigte Verriegelungsvorrichtung 1 besteht aus einem ersten Beschlagteil 2 und einer Beschlagplatte 3, die zueinander um eine Drehachse 4 schwenkbar sind. In die Außenkontur 5 des ersten Beschlagteils 2 ist eine Verzahnung 6 eingearbeitet, in welche ein mit einer komplementären Verzahnung 6' versehenes zweites Beschlagteil 7 in Form einer Rastklinke 7' lösbar in Formschluß bringbar ist. Die Rastklinke 7' ist ihrerseits um eine Achse 8 drehbar am zweiten Beschlagteil 3 angeordnet.

In der dargestellten Situation sind das erste Beschlagteil 2 und die Beschlagplatte 3 durch den Formschluß zwischen Rastklinke 7' und der Verzahnung 6 des ersten Beschlagteils 2 gegen Verdrehung gesichert. Durch Verschwenken der Rastklinke 7' in Richtung des Pfeils A wird der Formschluß gelöst, so dass die Beschlagplatte 3 gegenüber dem ersten Beschlagteil 2 in Richtung des Pfeils B nach vorne drehbar ist.

Das erste Beschlagteil 2 besteht aus einem Grundkörper 9, welcher aus einem zähelastischen Stahl gestanzt ist und über Bohrungen 10 in Verbindung mit nicht dargestellen Befestigungselementen (Schrauben, Nieten) oder durch Verschweißen mit einem Bauelement, beispielsweise dem Sitzteil eines Fahrzeugsitzes, verbunden ist. Das erste Beschlagteil 2 weist ferner einen Einsatz 11 aus einem hochfesten, härtbaren Werkstoff auf, welcher den mit der Verzahnung 6 versehenen Bereich der Außenkontur 6 des ersten Beschlagteils 2 ausbildet und formschlüssig in den Grundkörper 9 eingelassen ist. Der Formschluß ist derart vorgesehen, dass auf den Einsatz tangential wirkende Schubkräfte X sowie radiale Druckkräfte Y unmittelbar in den Grundkörper 9 übertragen werden. Ein seitliches Einschieben des Einsatzes 11 in den Grundkörper 9 bei der Montage der Verriegelungsvorrichtung ist hingegen möglich.

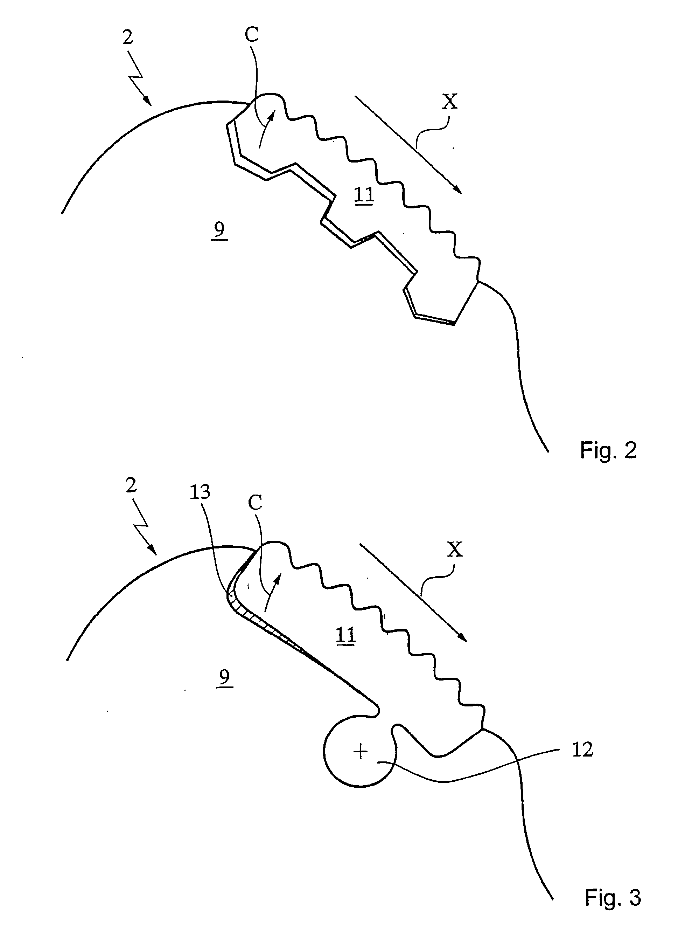

Der formschlüssige Eingriff zwischen dem Einsatz 11 und dem Grundkörper 9 ermöglicht jedoch eine gewisse Verlagerung des Einsatzes 11 im Falle einer auf die Verriegelung wirkenden Überlast, beispielsweise bei einem Unfall. Derartige Überlasten rufen durch elastische oder sogar plastische Verformung der Bauteile Lageveränderungen der Verzahnungen 6, 6' gegenüber der Designposition hervor, welche zu Lastspitzen und, im ungünstigsten Fall, zu einem Versagen der Verzahnungen 6, 6' führen können. Wie aus Fig. 2 ersichtlich, erlauben die komplementären Konturen von Grundkörper 9 und Einsatz 11 bei einer hohen tangential wirkenden Kraft X ein Kippen des Einsatzes 11 in Richtung des Pfeiles C, ohne dass der Formschluß zwischen Grundkörper 9 und Einsatz 11 aufgehoben wird. Durch diese Verlagerung werden das bei einem Unfall unvermeidliche Verkippen der Rastklinke 7' zumindest teilweise ausgeglichen und die Belastungen auf eine größere Anzahl von Zähnen verteilt.

Fig. 3 zeigt ein erstes Beschlagteil 2, bei welchen die Konturen von Einsatz 11 und Grundkörper 9 zu diesem Zwecke ein konkretes Gelenk 12 ausbilden.

Zur lateralen Sicherung des Einsatzes 11 und/oder zur Vermeidung von Klappergeräuschen ist die Fuge zwischen Einsatz 11 und Grundkörper 9 bei diesem Ausführungsbeispiel ferner mit einer elastischen Masse 13 ausgefüllt.

### Bezugszeichen

- 1: Verriegelungsvorrichtung
- 2: (erstes) Beschlagteil
- 3: Beschlagplatte
- 4: Drehachse
- 5: Außenkontur
- 6, 6': Verzahnung
- 7: (zweites) Beschlagteil
- 7': Rastklinke
- 8: Achse
- 9: Grundkörper
- 10: Bohrung
- 11: Einsatz
- 12: Gelenk

## Patentansprüche

1. Verriegelungsvorrichtung (1) für den Sitz eines Kraftfahrzeugs, mit mindestens einem ersten Beschlagteil (2) und einem zweiten Beschlagteil (7), die lösbar miteinander in formschlüssigen Eingriff bringbar sind, wobei mindestens das erste Beschlagteil (2) einen Grundkörper (9) sowie wenigstens einen in diesen eingelassenen Einsatz (11) mit einer zum formschlüssigen Eingriff mit dem zweiten Beschlagteil (7) geeigneten Außenkontur (5) aufweist, **dadurch gekennzeichnet, dass** der Einsatz (11) formschlüssig in den Grundkörper eingelassen ist.

2. Verriegelungsvorrichtung nach Anspruch 1, **dadurch gekennzeichnet, dass** der Grundkörper (9) aus einem zähelastischen Werkstoff und der Einsatz (11) aus einem relativ härteren Werkstoff besteht.

3. Verriegelungseinrichtung nach Anspruch 2, **dadurch gekennzeichnet, dass** der Grundkörper (9) aus Stahl mit einer Zugfestigkeit von 450 N/mm² bis 650 N/mm², vorzugsweise etwa 550 N/mm², insbesondere aus Stahl QSTE550 besteht.

4. Verriegelungseinrichtung nach Anspruch 2 oder 3, **dadurch gekennzeichnet, dass** der Einsatz (11) aus einem vorzugsweise härtbaren Stahl mit einer Zugfestigkeit von 1000 N/mm² bis 1600 N/mm², vorzugsweise etwa 1500 N/mm², insbesondere aus Stahl 42CrMo4 besteht.

5. Verriegelungseinrichtung nach einem der vorhergehenden Ansprüche, **dadurch gekennzeichnet, dass** das erste und zweite Beschlagteil (2, 7) zueinander verriegelbar rotationsbeweglich angeordnet sind.

6. Verriegelungsvorrichtung nach Anspruch 5, **dadurch gekennzeichnet, dass** die Drehachse (4) der Rotationsbewegung durch das erste Beschlagteil (2) verläuft und das zweite Beschlagsteil als ihrerseits schwenkbare Rastklinke (7') ausgebildet ist, die in mindestens einer Drehstellung zwischen den Beschlagteilen (2, 7) mit dem Einsatz (11) des ersten Beschlagteils (2) in Eingriff bringbar ist.

7. Verriegelungseinrichtung nach einem der vorhergehenden Ansprüche, **dadurch gekennzeichnet, dass** der Formschluß unter einer auf den Einsatz (11) wirkenden Schubbelastung, d.h., unter einer tangential wirkenden Kraft (X), eine den Eingriff mit dem zweiten Beschlagteil (7) verbessernde Lageänderung des Einsatzes bewirkt.

8. Verriegelungseinrichtung nach einem der vorhergehenden Ansprüche, **dadurch gekennzeichnet, dass** der Formschluß zwischen Grundkörper (9) und Einsatz (11) nur in tangentialer oder radialer, nicht jedoch in lateraler Richtung wirkt.

9. Verriegelungseinrichtung nach einem der vorhergehenden Ansprüche, **dadurch gekennzeichnet, dass** der Einsatz (11) zusätzlich stoffschlüssig, bevorzugt mittels einer elastisch und/oder plastisch verformbaren Masse (13), mit dem Grundkörper (9) verbunden ist.

## Claims

1. Blocking mechanism (1) for the seat of a motor vehicle, with at least one first fitting part (2) and one second fitting part (7) which can be brought releasably into form-fitting engagement with each other, at least the first fitting part (2) having a basic body (9) and at least one insert (11) which is embedded in the latter and has an outer contour (5) suitable for the form-fitting engagement with the second fitting part (7), **characterized in that** the insert (11) is embedded in the basic body (9) in a form-fitting manner.

2. Blocking mechanism according to Claim 1, **characterized in that** the basic body (9) is composed of a viscoplastic material and the insert (11) is composed of a relatively harder material.

3. Blocking mechanism according to Claim 2, **characterized in that** the basic body (9) is composed of steel with a tensile strength of 450 N/mm² to 650 N/mm², preferably approximately 550 N/mm², in particular of QSTE550 steel.

4. Blocking mechanism according to Claim 2 or 3, **characterized in that** the insert (11) is composed of a preferably hardenable steel with a tensile strength of 1000 N/mm² to 1600 N/mm², preferably approximately 1500 N/mm², in particular of 42CrMo4 steel.

5. Blocking mechanism according to one of the preceding claims, **characterized in that** the first and second fitting parts (2, 7) are arranged such that they are rotationally movable in a manner where they are blockable with respect to each other.

6. Blocking mechanism according to Claim 5, **characterized in that** the axis of rotation (4) of the rotation movement runs through the first fitting part (2) and the second fitting part is designed as a latching pawl (7') which, for its part, is pivotable and can be brought into engagement with the insert (11) of the first fitting part (2) in at least one rotational position between the fitting parts (2, 7).

7. Blocking mechanism according to one of the preceding claims, **characterized in that**, under a shearing load, i.e. under a tangentially acting force (X) acting on the insert (11), the form-fitting connection brings about a change in position of the insert improving the engagement with the second fitting part (7).

8. Blocking mechanism according to one of the preceding claims, **characterized in that** the form-fitting connection between the basic body (9) and insert (11) acts only in the tangential or radial direction but not in the lateral direction.

9. Blocking mechanism according to one of the preceding claims, **characterized in that** the insert (11) is additionally connected to the basic body (9) with a cohesive material joint, preferably by means of an elastically and/or plastically deformable compound (13).

## Revendications

1. Dispositif de blocage (1) pour le siège d'un véhicule automobile, avec au moins une première ferrure (2) et une deuxième ferrure (7), qui peuvent être amenées en engagement par complémentarité de forme l'une avec l'autre de façon séparable, dans lequel au moins la première ferrure (2) comprend un corps de base (9) ainsi qu'au moins un insert (11) logé dans celui-ci, avec un contour extérieur (5) apte à s'engager en complémentarité de forme avec la deuxième ferrure (7), **caractérisé en ce que** l'insert (11) est logé en complémentarité de forme dans le corps de base.

2. Dispositif de blocage selon la revendication 1, **caractérisé en ce que** le corps de base (9) est constitué d'une matière viscoplastique et l'insert (11) d'une matière relativement plus dure.

3. Dispositif de blocage selon la revendication 2, **caractérisé en ce que** le corps de base (9) est constitué d'acier ayant une résistance à la traction de 450 N/mm² à 650 N/mm², de préférence d'environ 550 N/mm², en particulier d'acier QSTE550.

4. Dispositif de blocage selon la revendication 2 ou 3, **caractérisé en ce que** l'insert (11) est constitué d'un acier de préférence trempant ayant une résistance à la traction de 1000 N/mm² à 1600 N/mm², de préférence d'environ 1500 N/mm², en particulier d'acier 42CrMo4.

5. Dispositif de blocage selon l'une quelconque des revendications précédentes, **caractérisé en ce que** la première et la deuxième ferrures (2, 7) sont disposées de façon mobile en rotation pour se verrouiller l'une à l'autre.

6. Dispositif de blocage selon la revendication 5, **caractérisé en ce que** l'axe de rotation (4) du mouvement de rotation s'étend à travers la première ferrure (2) et la deuxième ferrure se présente sous la forme d'un cliquet à crans (7') apte à pivoter de son côté, qui peut être amené en engagement avec l'insert (11) de la première ferrure (2) dans au moins une position de rotation entre les deux ferrures (2, 7).

7. Dispositif de blocage selon l'une quelconque des revendications précédentes, **caractérisé en ce que** l'assemblage par complémentarité de forme sous une sollicitation de cisaillement agissant sur l'insert (11), c'est-à-dire sous une force (X) agissant tangentiellement, entraîne un changement de position de l'insert qui améliore l'engagement avec la deuxième ferrure (7).

8. Dispositif de blocage selon l'une quelconque des revendications précédentes, **caractérisé en ce que** l'assemblage par complémentarité de forme entre le corps de base (9) et l'insert (11) n'agit qu'en direction tangentielle ou radiale, mais pas en direction latérale.

9. Dispositif de blocage selon l'une quelconque des revendications précédentes, **caractérisé en ce que** l'insert (11) est en plus assemblé au corps de base (9) par complémentarité de matière, de préférence au moyen d'une masse (13) déformable élastiquement et/ou plastiquement.
